# EUROPEAN PATENT APPLICATION

(11) **EP 2 554 309 A1**
(43) Date of publication of application: **06.02.2013**
(21) Application number: 11762688.7
(22) Date of filing: 25.03.2011
(51) Int. Cl.: B23C 5/10

(54) **ENDMILL**

(30) Priority: 29.03.2010 JP 2010074830
(71) Applicant: Mitsubishi Materials Corporation, Chiyoda-ku Tokyo 100-8117 (JP)
(72) Inventor: AZEGAMI Takayuki, Akashi-shi Hyogo 674-0071 (JP)
(74) Representative: HOFFMANN EITLE
(86) International application number: PCT/JP2011/057280
(87) International publication number: WO 2011/122457

(57) **Abstract**

Provided is an end mill wherein:
the generation of burrs can be controlled according to the various machining conditions and/or to the board thicknesses of the various work pieces to be machined; and
smooth machining work can be carried out, with good chip removal performance, and with a finished surface of excellent quality.

In this end mill, an end mill body 1 rotatable on an axis O has a cutting edge section 3 which provides
first peripheral cutting edges 4A which are handed and helically shaped around the axis O, and
second peripheral cutting edges 4B with a linear shape extending straight in parallel to the axis O.

Further, the first peripheral cutting edges 4A are right-handed helical and right hand teeth formed as a helical shape handed in the end mill rotational direction T from the rear side to the top side.

## Description

### [Technical Field]

This invention relates to an end mill with helical cutting edges.

### [Background Art]

Although an end mill with helical cutting edges reduces cutting resistance and provides enhanced machining performance; due to its mechanism, burrs are generated at a terminal portion of where the machining work takes place. Especially, in cases where a workpiece is made of a material which easily generates burrs, or has a board shape; the problem of burrs becomes significant. Recently, such end mills with helical cutting edges are used for machining a board workpiece made from carbon fiber reinforced plastic (CFRP) which is used for airplanes and is a difficult-to-cut material. The burrs generated during the machining cause a phenomenon of so-called delamination in which the laminated fibers are peeled off. Thus, the generation of burrs must be prevented.

As a solution to the above problem of burrs, for example Patent Citation 1 discloses an end mill which provides both left-handed and right-handed helical cutting edges, namely, teeth, on the periphery of its body having a straight shaft shape. Since this end mill provides two types of helical peripheral cutting edges handed differently to each other, the right-handed helical peripheral cutting edges remove burrs generated by the left-handed helical peripheral cutting edges during machining. This reduces the generation of burrs as much as possible. Further, this extends tool life as well as securing accurate cutting operation; and then excellent machining work can be carried out.

Further, Patent Citation 2 discloses an end mill which provides first and second cutting edge sections having a helical shape. The first cutting edge section is located on the shank side of the end mill, and is helical in one handed direction. The second cutting edge section is located to the top side of the end mill, and is helical in the other handed direction opposite to that of the first cutting edges. In this end mill, the second cutting edge section removes burrs generated by machining of the first cutting edge section. This is also an attempt to reduce the generation of burrs as much as possible.

### [Prior Art]

### [Patent Documents]

[Patent Citation 1]
   Japanese Unexamined Patent Application Publication JP S64-20913A
[Patent Citation 2]
   Japanese Unexamined Patent Application Publication JP H06-246525A

### [Disclosure of Invention]

### [Technical Problem]

The end mill disclosed in the above Patent Citation 1 is designed with an aim that the right-handed helical peripheral cutting edges remove the burrs generated by machining of the left-handed helical peripheral cutting edges. However, the right-handed helical peripheral cutting edges cannot always machine the portions which the left-handed helical peripheral cutting edges have machined in advance. Thus, the technical problem still remains, in which a desirable reduction in the generation of burrs is difficult.
In other words, if a workpiece to be machined has a board shape, in order to remove burrs completely during finishing machining work, the left-handed helical peripheral cutting edges are lastly required to machine vicinities of the upper face of the workpiece, and also the right-handed helical peripheral cutting edges are lastly required to machine vicinities of the lower face. However, depending on machining conditions, there will be a case wherein: the left-handed helical peripheral cutting edges machine vicinities of the lower face, and the right-handed helical peripheral cutting edges machine vicinities of the upper face. That is, machining work cannot always be carried out ideally.

Further, while the right-handed helical peripheral cutting edges are machining a workpiece, force acts on it toward its upper face side. On the other hand, while the left-handed helical peripheral cutting edges are machining the workpiece, force acts on it toward its lower face side. That is, the forces opposed to each other act on the workpiece in its board thickness direction. Especially, if the workpiece to be machined is a thin board, such forces incur risks of the workpiece vibration and/or of delamination.
Further, for example, replacing all the helical peripheral cutting edges by straight ones, is effective for reducing the generation of burrs. However, this method causes a tremendous increase in the cutting resistance, and thus smooth machining work cannot be carried out.

Also, the end mill disclosed in the above Patent Citation 2, should provide helical cutting edge sections (peripheral cutting edges) formed with each helix handed differently to each other at the top and shank sides. Due to the geometrical restrictions, it is difficult to produce this shape as a solid end mill. In other words, this end mill must be a conjunction type end mill having individual cutting edge sections (peripheral cutting edges) prepared for its top and shank sides respectively. Naturally, the cost of production of such an end mill is not so low. Also, it is possible for chips generated during the machining work to collide with each other, and then there are difficulties with chip removal performance. Additionally, there are boundaries at the joints, and the boundaries leave traces in stripes on a finished surface of a workpiece during machining work. Thus, there is an issue in which problems may occur in the quality of the finished surface.

The inventors have properly recognized the aforementioned problems, and the aim of the present invention is to provide an end mill wherein: the generation of burrs can be controlled according to the various machining conditions and/or to the board thicknesses of the various work pieces to be machined; and smooth machining work can be carried out, with good chip removal performance, and with a finished surface of excellent quality.

### [Technical Solution]

In order to solve the aforementioned problems, the present invention offers the following solution.
That is, the end mill of the present invention is an end mill comprising:
an end mill body rotatable on an axis and;
a cutting edge section of the end mill body which provides first peripheral cutting edges which are handed and helically shaped around the axis, and
second peripheral cutting edges with a linear shape extending straight in parallel to the axis.

When using the end mill having the aforementioned mechanism for machining a workpiece, the first peripheral cutting edges as helical cutting edges can cut a workpiece smoothly, since they decrease the cutting resistance and have excellent machining performance. Concurrently with this cutting, the second peripheral cutting edges as straight teeth can cut the workpiece, so that they were tracing its whole machining surfaces. That is, if the first peripheral cutting edges generate burrs, the second peripheral cutting edges can remove the burrs. Thus, even if a workpiece to be machined tends to generate burrs easily, the burrs generated on the upper and/or lower faces of the board shaped workpiece cannot remain.
Further, during machining work, the first peripheral cutting edges as helical cutting edges, apply force which acts only in one direction on the upper or lower surface of a board workpiece. Therefore, it is impossible for the forces opposed to each other to act on the workpiece in its board thickness direction; and then the occurrence of workpiece vibration and/or of delamination caused by the opposed forces, can be prevented.
Furthermore, chips generated by machining of the first and/or second peripheral cutting edges can be carried along these peripheral cutting edges onto the upper and/or lower faces of the board workpiece. Thus, good chip removal performance can be secured. Also, since no boundary between the first and second peripheral cutting edges is formed at the middle portion of the cutting edge section in the direction of the axis, no quality trouble will occur on the finished surface.

Further, in the aforementioned end mill, it is preferable that the first peripheral cutting edges be formed in a helical shape handed in the rotational direction of the end mill from its rear end to its top.
This shape makes the chips generated from the cutting by the first peripheral cutting edges be removed to the upper face side of the board workpiece, and therefore the chips can be discharged smoothly.

Additionally, in the aforementioned end mill, it is preferable that:
the second peripheral cutting edges be formed of one or more pair(s) and;
the second peripheral cutting edges which are paired with each other, be disposed symmetrically to the axis.
When using the end mill having such a structure for machining work, the pair of second peripheral cutting edges contacts the machining surface at both sides symmetrical to the axis respectively in the entire direction of the axis. In this condition, the second peripheral cutting edges, as a pair, of the end mill and the machining surface, are contacting each other so that the machining surface supports the end mill; and stability of the end mill can be secured. Therefore, vibrations of the axis of the end mill can be prevented; and then smooth machining work can be carried out obtaining a highly accurate machining face.

### [Advantageous Effects]

Since an end mill of the present invention provides the first peripheral cutting edges as helical cutting edges and the second peripheral cutting edges as straight teeth, the generation of burrs can be controlled according to the various machining conditions and/or to the board thicknesses of the various work pieces to be machined. Further, smooth machining work can be carried out, with a finished surface of excellent quality.

### [Brief Description of the Drawings]

[Fig. 1] A perspective view of an embodiment of the end mill.
[Fig. 2] A side view of an embodiment of the end mill viewed from the front of the first peripheral cutting edge.
[Fig. 3] A side view of an embodiment of the end mill viewed from the front of the second peripheral cutting edge.
[Fig. 4] A top view of an embodiment of the end mill.
[Fig. 5] A development view of an embodiment of the end mill.

### [Explanation of Reference Numerals]

- 1: End mill body
- 2: Shank
- 3: Cutting edge section
- 4A: First peripheral cutting edges
- 4B: Second peripheral cutting edges
- O: Axis
- T: End mill rotational direction

### [Best Mode of Carrying Out the Invention]

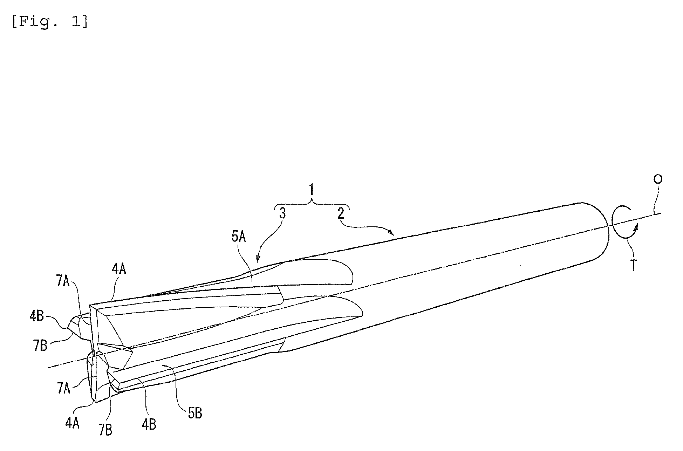

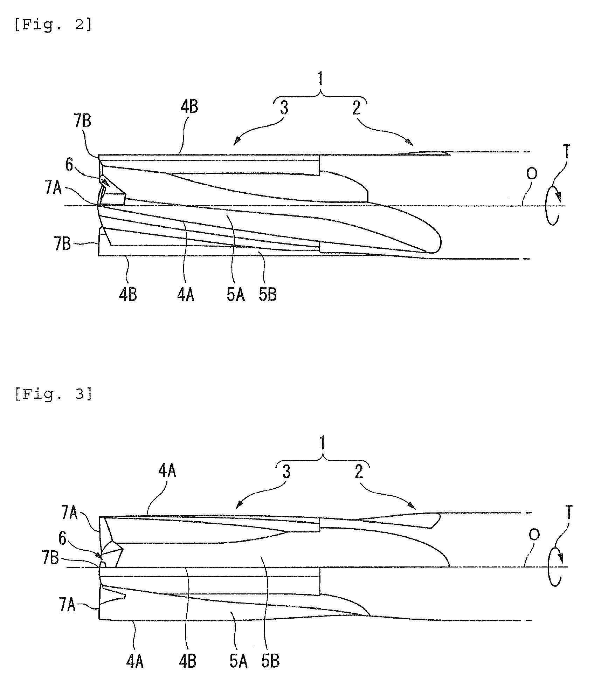

Referring to Figs. 1 through 5, an embodiment of the end mill relating to the present invention is detailed in the following descriptions.
As shown in Figs. 1 through 3, the end mill is made from a hard material such as cemented carbide, and has an end mill body 1 which forms an approximate circular cylindrical shape on an axis O as its center axis. The rear side (right side in Figs. 2 and 3) of the end mill body is a shank 2 having a circular cylindrical shape, and the top side (left side in Figs. 2 and 3) thereof is a cutting edge section 3.

To use the end mill for machining a workpiece, as the first step, the shank 2 is held in the spindle of a machine tool; and then the end mill is rotated on the axis O in an end mill rotational direction T. Next, the spindle of a machine tool feeds the end mill body 1 in a direction intersecting the axis O. Also, there is a case in which the spindle of a machine tool feeds the end mill body 1 toward its top side in a direction parallel to the axis O. Thereby, machining work, in which the cutting edge section 3 machines the workpiece, is carried out.

On the periphery of the cutting edge section 3, first peripheral cutting edges 4A and second peripheral cutting edges 4B are provided respectively.
The first peripheral cutting edges 4A which are helical cutting edges, extend from the rear end side to the top end, and are helical around the axis O. In this embodiment, the first peripheral cutting edges 3A are formed so as to be handed in the end mill rotational direction T (right-handed, viewed from the shank side) from the rear end to the top end. The helix angle of the first peripheral cutting edges 3A, is made approximately 10 degrees for example.

Additionally, in this description, 'left' or 'right' used for indicating the rotational direction and/or the handedness of a helix, is determined from the view of the cutting edge section 3 from the shank 2 side.
Thus, in the end mill of this embodiment, the end mill rotational direction T is right-handed, and the first peripheral cutting edges 4A are right-handed helical and right hand teeth. In a cross-section perpendicular to the axis O, a distance from the axis O to the first peripheral cutting edges 4A, namely, a radius of the first peripheral cutting edge 4A, is constant in the whole range where the first peripheral cutting edges 4A are provided throughout.

The second peripheral cutting edges 4B are straight teeth which extend straight in parallel to the axis from the rear end side toward the top end. In a cross-section perpendicular to the axis O, a distance from the axis O to the second peripheral cutting edges 4B, namely, a radius of the second peripheral cutting edge 4B, is constant in the whole range where the second peripheral cutting edges 4B are provided throughout. Also, the radius of the second peripheral cutting edge 4B is approximately equal to that of the first peripheral cutting edge 4A.
Additionally, as mentioned above, the end mill of this embodiment includes the first peripheral cutting edges 4A which are helical cutting edges, and the second peripheral cutting edges 4B which are straight teeth. Since the helix angles of both cutting edges are different from each other, such an end mill is a so-called variable lead end mill.

Further, in the end mill of this embodiment, two first peripheral cutting edges 4A and two second peripheral cutting edges 4B, namely, a total of four peripheral cutting edges, are provided alternatively in the direction of its circumference. Additionally, ahead of the first peripheral cutting edges 4A and of the second peripheral cutting edges 4B in the end mill rotational direction T, flutes 5A and flutes 5B for discharging chips are incorporated. These flutes are formed along the first peripheral cutting edges 4A and/or along the second peripheral cutting edges 4B from the rear of the cutting edge section 3 to the top. The flutes 5A, which are along the first peripheral cutting edges 4A, are formed with the same helical shape as the first peripheral cutting edges 4A. The flutes 5B, which are along the second peripheral cutting edges 4B, are formed with the same linear shape as the second peripheral cutting edges 4B. In the cross sectional view perpendicular to the axis O, these flutes 5A and 5B are concaves and form a concavely curved shape.

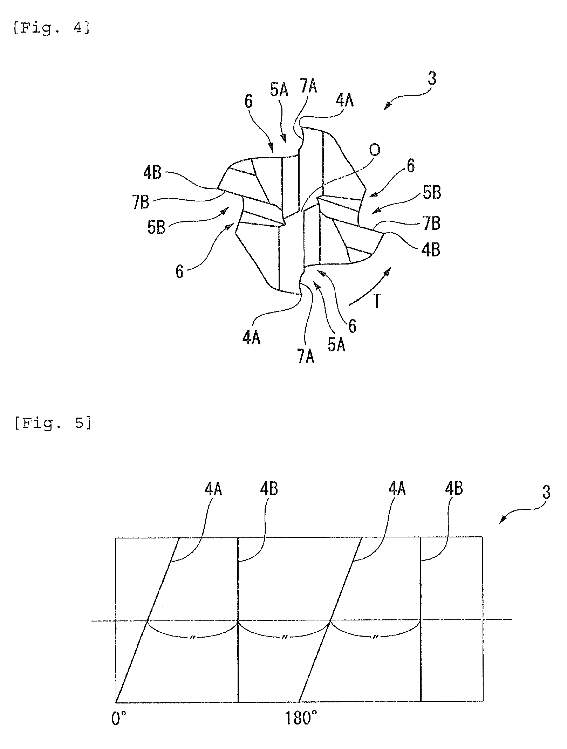

Fig. 4 shows that the end mill body 1 provides end gashes 6, at its top portion, which extend radially inwardly from each of the flutes 5A and 5B. The wall of each end gash 6, which faces the end mill rotational direction T, has a flat shape as if it were formed by cutting off outwardly the walls of the flutes 5A or 5B having concavely curved shapes. Further, at the top end side of the walls of the flutes 5A and 5B, the end mill body 1 provides ridge lines, namely, end cutting edges 7A and 7B which extend radially inwardly from the tops of both the first peripheral cutting edges 4A and the second peripheral cutting edges 4B.

Therefore, the walls of the end gashes 6 are rake faces of the end cutting edges 7A and 7B. Further, the two or more of ridge lines (four in this embodiment) corresponding to the first peripheral cutting edges 4A and to the second peripheral cutting edges 4B, namely, the end cutting edges 7A and 7B are formed with a linear shape extending radially inwardly from the outer circumference side of the end mill body 1 in the top view in the direction of the axis O.

The shapes of the first peripheral cutting edges 4A and the second peripheral cutting edges 4B are approximately cylindrical with a center axis as the axis O in a rotational locus around the axis O. Also, the first peripheral cutting edges 4A and the second peripheral cutting edges 4B, and the end cutting edges 7A and 7B, intersect at approximately right angles in the rotational locus. This end mill is a so-called square type end mill.

Here, referring to Fig. 5 which shows the development view, a positional relation between the first peripheral cutting edges 4A and the second peripheral cutting edges 4B is detailed in the following descriptions. As shown in Fig. 5, in this embodiment, the first peripheral cutting edges 4A as a pair are symmetrical with respect to the axis O; and the second peripheral cutting edges 4B as a pair are symmetrical with respect to the axis O, too. In other words, the first peripheral cutting edges 4A are located at a distance from each other at an angle of 180 degrees in the circumferential direction around the cutting edge section; and the second peripheral cutting edges 4B are located at a distance from each other at an angle of 180 degree in the circumferential direction around the cutting edge section, too.

In another case, every circumferential distance between the first peripheral cutting edges 4A and the second peripheral cutting edges 4B next to each other, is constructed so as to be the same at the top side of a section where the first peripheral cutting edges 4A and the second peripheral cutting edges 4B are formed in the direction of the axis O. In this case, since the first peripheral cutting edges 4A and the second peripheral cutting edges 4B have to intersect each other at the rear side in the direction of the axis O, a length of their cutting edges becomes short.
Further, in yet another case is mentioned in which every circumferential distance between the first peripheral cutting edges 4A and the second peripheral cutting edges 4B next to each other, is constructed so as to be the same at the rear side of the section where the first peripheral cutting edges 4A and the second peripheral cutting edges 4B are formed in the direction of the axis O. In this case, since the first peripheral cutting edges 4A and the second peripheral cutting edges 4B have to intersect each other at the top side in the direction of the axis O, a length of their cutting edges also becomes short.

On the other hand, in this embodiment, as shown in Fig. 5, every circumferential distance between the first peripheral cutting edges 4A and the second peripheral cutting edges 4B next to each other, is constructed so as to be the same at the center of the section where the first peripheral cutting edges 4A and the second peripheral cutting edges 4B are formed in the direction of the axis O. Thereby the longest cutting edge length of the first peripheral cutting edges 4A and the second peripheral cutting edges 4B can be secured.

Work of the end mill having the above construction is detailed in the following descriptions.
Firstly, rotating the end mill body 1 in a right-handed rotational direction, the level of the cutting edge section 3 and that of a board workpiece to be machined, are adjusted to be same. The board workpiece is made from, for example, carbon fiber reinforced plastic. Then the end mill is fed in a direction of the surface of the board workpiece. Here, the end mill 1 of this embodiment provides the first peripheral cutting edges 4A as helical cutting edges, which reduce the cutting resistance and provide an excellent machining performance. Thus, since the first peripheral cutting edges 4A mainly form the machining surfaces of a workpiece, the machining work can be carried out smoothly.

Here, in this embodiment, since the end mill rotational direction is right-handed and the first peripheral cutting edges 4A are right-handed helical and right hand teeth, the machining work by the first peripheral cutting edges 4A tend to generate burrs on the upper face of the board workpiece. In order to solve this matter, the second peripheral cutting edges 4B, which are straight teeth, as well as the first peripheral cutting edges, perform the machining work. That is, the second peripheral cutting edges 4B can perform the machining work, as if tracing the whole machining surfaces of the workpiece. The machining work by the second peripheral cutting edges 4B can remove the burrs from the machining surfaces. Thus, the burrs generated on the board workpiece cannot remain.

Further, using peripheral cutting edges consisting of only straight teeth, for example, is effective in view of controlling the generation of burrs. However, cutting resistance caused by the straight teeth will increase in this case, and then smooth machining work cannot be carried out. On the other hand, in this embodiment, since the end mill provides both the helical cutting edges and the straight teeth, the machining work can be carried out smoothly together with removing the generated burrs.

Further, during machining work, a force from the first peripheral cutting edges 4A as helical cutting edges, acts on the board workpiece toward its upper face side only. In a case in which a right hand end mill provides both of right-handed helical teeth and left-handed helical teeth, the forces opposed to each other act on the board workpiece in its board thickness direction while machining work. In this embodiment, such forces opposed to each other do not act. Therefore, occurrence of workpiece vibration, namely, board vibration, and/or of delamination can be prevented.

Furthermore, chips generated by the first peripheral cutting edges 4A and/or by the second peripheral cutting edges 4B can be carried along these peripheral cutting edges 4A and/or 4B onto the upper and/or lower surfaces of the board shaped workpiece. Thus, good chip removal performance can be secured. Also, since no boundary between the first peripheral cutting edges 4A and the second peripheral cutting edges 4B is formed at the middle portion of the cutting edge section 3 in the direction of the axis O, no quality trouble will occur on the finished surface.

Further, in this embodiment, the first peripheral cutting edges 4A are right-handed helical and right hand teeth formed as a helical shape handed in the end mill rotational direction T from the rear side to the top side. Thus, the chips generated by machining of the first peripheral cutting edges 4A, are discharged to the upper face side of the board workpiece. If the chips are discharged to the lower face side of the board workpiece, the chips from the workpiece become difficult to discharge, and then there will be a problem in which the build up of heat generated while machining deforms the workpiece. However, in this embodiment, the chips are discharged to the upper face side only. Therefore, this structure makes disposal of the chips easy, and the above problem can be avoided.

Furthermore, a pair of the second peripheral cutting edges 4B and 4B, which are straight teeth, are located at a distance from each other at an angle of 180 degrees in the circumferential direction. Thus, during machining work, both of the second peripheral cutting edges 4B and 4B are contacting the machining surface at both sides symmetrical with respect to the axis O in the entire direction of the axis O. Thus, stability of the end mill body 1 can be secured, and vibrations of the axis O can be prevented. Thereby, smooth machining work can be carried out to obtain a highly accurate machining face.

Although the embodiment of the end mill of the invention has been described in detail, the invention is not limited thereto as long as the embodiment does not depart from the technical idea of the invention. Additionally, some design variations can be made.
For example, in the end mill of the aforementioned embodiment, the end mill rotational direction T is right-handed, and the first peripheral cutting edges 4A are right-handed helical and right hand teeth. However, the invention is not limited to this configuration. For example, the end mill with a configuration is usable, in which the rotational direction T is left-handed, and the first peripheral cutting edges 4A are left-handed helical and left hand teeth. In this case, similarly to the aforementioned embodiment, by discharging the chips to the upper face side, the generation of burrs can be avoided.
Further, other configurations are usable, in which the rotational direction T is right-handed, and the first peripheral cutting edges 4A are left-handed helical and right hand teeth; and the rotational direction T is left-handed, and the first peripheral cutting edges 4A are right-handed helical and left hand teeth. In these cases, although the chips are discharged to the lower face side, the generation of burrs can be avoided similarly to the aforementioned embodiment.

Additionally, in the aforementioned embodiment, an end mill with two first peripheral cutting edges 4A and two second peripheral cutting edges 4B, namely, a total of four peripheral cutting edges are provided, has been described as a sample of the end mill. The invention is not limited thereto, and is applicable to an end mill, which provides one first peripheral cutting edge 4A and one second peripheral cutting edge 4B, or provides three or more first peripheral cutting edges 4A and three or more second peripheral cutting edges 4B.

### [Industrial Applicability]

Use of an end mill related to this invention allows machining work in which the generation of burrs can be avoided according to the various machining conditions and/or to the board thicknesses of the various work pieces to be machined. Also, smooth machining work can be carried out with a finished surface of excellent quality.

## Claims

1. An end mill comprising:
an end mill body rotatable on an axis; and
a cutting edge section of the end mill body which provides first peripheral cutting edges which are handed and helically shaped around the axis, and
second peripheral cutting edges with a linear shape extending straight in parallel to the axis.

2. An end mill according to Claim 1, wherein:
the first peripheral cutting edges are formed in a helical shape handed in the rotational direction of the end mill from its rear end to its top.

3. An end mill according to Claim 1 or 2, wherein:
the second peripheral cutting edges are formed of one or more pair(s) and;
the second peripheral cutting edges which are paired with each other, are disposed symmetrically to the axis.
